# EUROPÄISCHE PATENTSCHRIFT

(11) **EP 1 080 979 B1**
(45) Veröffentlichungstag und Bekanntmachung des Hinweises auf die Patenterteilung: **26.07.2006**
(21) Anmeldenummer: 00117236.0
(22) Anmeldetag: 14.08.2000
(51) Int. Cl.: B60K 37/06, B60K 35/00

(54) **Verfahren zur Gerätebedienung in Kraftfahrzeugen**
Method of operating devices in motor vehicles
Procédure d'opération de dispositifs en automobiles

(30) Priorität: 03.09.1999 DE 19941944
(43) Veröffentlichungstag der Anmeldung: 07.03.2001
(73) Patentinhaber: Volkswagen Aktiengesellschaft, 38436 Wolfsburg (DE)
(72) Erfinder: Crull, Torsten, 38106 Braunschweig (DE); Heimermann, Matthias, 38302 Wolfenbüttel (DE); Liebig, Eckhard, 38518 Gifhorn (DE)

(56) Entgegenhaltungen:
- DE-A- 19 735 977
- DE-C- 3 514 438
- DE-U- 29 710 675

## Beschreibung

Die Erfindung betrifft ein Verfahren zur Gerätebedienung in Kraftfahrzeugen mit einem Multifunktionsbedienelement, bei welchem verschiedenen Geräten zugewiesene Funktionen auf einem gemeinsamen Display dargestellt bzw. angezeigt werden und deren Einstellbarkeiten Funktionstasten zugewiesen werden, gemäß Oberbegriff des Patentanspruches 1.

Sogenannte Multifunktionsbedienelemente und Verfahrensweisen zum Betrieb derselben sind im Stand der Technik schon vielfach bekannt. Hierbei werden Geräte innerhalb des Kraftfahrzeuges nicht mehr einzeln mit jeweiligen Displays versehen, sondern im Kraftfahrzeug ist ein zusammenhängendes gesamtes Display für die allumfassenden Gerätebedienungen angeordnet. Um dieses Display herum sind Funktionstasten angeordnet, denen entsprechende Funktionen zugewiesen werden können. Zu den im Kraftfahrzeug verfügbaren Geräten gehört die Audioanlage, welche das Radio, aber auch die Wiedergabemöglichkeit von Tonträgem wie CD-Spieler, Kassettenspieler und dgl. umfaßt.

Darüber hinaus umfaßt das System die Darstellung des Navigationssystemes, des Bordcomputers, der Telefonanlage und dgl. mehr. Die Summe der zu steuernden Geräte ist dabei von der Ausstattung des jeweiligen Kraftfahrzeuges abhängig. Wichtig ist hierbei, daß ein solches Multifunktionsbedienelement für eine Vielzahl von Geräten leicht bedienbar sein muß.

Zur weitergehenden Verhinderung einer unnötigen Ablenkung des Fahrzeugführers vom Verkehrsgeschehen müssen die oftmals menügeführten Funktionsweisen selbsterklärend sein. Die Bedientasten müssen dabei gut erreichbar positioniert sein, und der Bildschirm des Multifunktionsbedienelementes muß zudem auch leicht einsehbar sein. Im übrigen führt eine Zusammenfassung der Bedientasten auf eine im haptischen Bereich des Fahrzeugführers konzentrierte Position schon zu einer deutlichen Herabsetzung der Fahrerablenkung. Im Gegensatz dazu müßte der Fahrzeugführer ansonsten während des Verkehrsgeschehens immer wieder andere Positionen jeweils anderer Geräte finden und bedienen können. Insofern ist eine Konzentration an einen entsprechenden Bedienort innerhalb des Kraftfahrzeuges schon für sich gesehen eine Erleichterung auch im Sinne einer Erhöhung der Sicherheit durch eine Verminderung einer übergebührlichen Ablenkung.

Aus der gattungsgemäßen DE 3514438 C1 ist beispielsweise eine zentrale Bedienungsein- und Informationsausgabe für Zusatzgeräte von Fahrzeugen bekannt, die eine Anzeigeeinheit umfasst, deren Anzeige in Felder zur Darstellung von Informationen und Funktionsauswahltabellen (Menus) untergliederbar ist, sowie Bedientasten, die den Elementen der Menus eindeutig zugeordnet sind. Die Elemente der Menus geben dabei Funktionen an, die durch die jeweiligen Bedienelemente anregbar sind. Einzelne oder mehrere Zusatzgeräte bedienende Menus sind dabei über wenigstens ein auf der Anzeige darstellbares Grundmenu anwählbar. Der Nachteil dieser Vorrichtung besteht jedoch darin, dass dem Benutzer keine separaten Gerätewahltasten zur Verfügung stehen, um die einzelnen oder mehrere Geräte bedienenden Menus von Jedem beliebigen Ausgangspunkt in der Menuhierarchie aufrufen zu können. Vielmehr muss der Benutzer hierzu stets zunächst das Grundmenu aktivieren, von wo aus er dann erst die Möglichkeit bekommt mittels der Bedientasten ein anderes Gerätemenu aufzurufen.

Aus der DE 19735977 A1 ist eine Bedien- und Steuereinheit für eine Heizungs-, Belüftungs-und/oder Klimaanlage und für die Sitzheizungs- und/oder Sitzbelüftungsanlage bekannt, bei welcher immer gleiche Bedienelemente zur Verstellung von Sollwerten genutzt werden und wobei über zumindest ein elektrisches Schaltelement die jeweils zu steuemde Anlage vorwählbar ist. Den Bedienelementen sind dabei Anzeigeelemente zugeordnet, auf denen die jeweils aktuelle Funktionalität des Bedienelements sowie der jeweils aktuellen Funktionalität des Bedienelements zugeordnete Sollwerte angezeigt werden, die mittels des Bedienelements verstellbar sind. Die Bedienelemente sind dabei normalerweise zur Steuerung der Heizungs-, Belüftungs- und/oder Klimaanlage eingestellt, wobei elektrische Schaltelemente zur Vorwahl der Funktionalität "Sitzheizung" vorgesehen sind, nach deren Betätigung die Bedienelemente für eine festgelegte Zeitspanne in der jeweiligen Funktionalität nutzbar sind, und wobei sich die Zeitspanne bei Betätigung der Bedienelemente verlängert. DerNachteil dieser Vorrichtung liegt darin, dass sie nicht die Vielseitigkeit einer tatsächlich menugeführten Bedien- und Anzeigeeinheit aufweist, die eine beliebige Anzahl regelbarer Funktionen eines Geräts kontrollierbar macht, sondern lediglich mittels der fest vorgegebenen Bedientasten stets nur der gleiche Grundtyp von Parametern, nämlich größere oder kleinere Sollwerte, eingebbar sind.

Um die Bedienbarkeit mehrerer Geräte von einem zentralen Multifunktionsbedienelement aus realisieren zu können, ist beispielsweise aus der EP 0 701 926 A2 ein solches Multifunktionsbedienelement, insbesondere für den Gebrauch in Kraftfahrzeugen bekannt und beschrieben. Bei diesem Multifunktionsbedienelement, bei welchem ein Bildschirm sowie ein oder mehrere Tastenfelder Verwendung finden, werden Bedien- und Schaltelemente bzw. Tasten logisch zugewiesen. Die Zuweisung erfolgt dabei derart, daß eine übergeordnete Funktionsgruppe zunächst die ansprechende Einheit auswählt und darüber hinaus den untergeordneten Funktionsgruppen oder Bedienelementen sozusagen die Geräte zuweist, die nunmehr bedient werden sollen. Die Bedienelemente, d. h. die Tasten zur Bedienung sind randseitig neben oder unter dem Bildschirm verteilt angeordnet. Der Bildschirm selbst hat eine fest vorgegebene Abmessung, so daß eine Position der randseitigen Tasten nachhaltig ortsfest gegeben ist. Das hier dargestellte System geht jedoch von einer starren Bildschirmgeometrie aus, die natürlich auch die Funktionsvielfalt entsprechend einschränkt.

Zur Funktionszuweisung oder Gerätezuweisung des Displays alleine, oder des Displays samt den randseitig angeordneten Funktionstasten, sind in diesem Stand der Technik unterhalb des Displays Auswähltasten vorgesehen, über deren Betätigung das Display einem bestimmten Gerät, d. h. einem ausgewählten Gerät im Kraftfahrzeug zugeordnet werden soll. Es handelt sich bei den hier vorhandenen Auswahltasten um solche Gerätezuweisungen, die ansonsten üblicherweise über ein eigenes Display verfügen. Dies betrifft beispielsweise den Audiobetrieb, den Telefonbetrieb, den Betrieb der Navigationseinrichtung sowie des Bordcomputers.

Will man jedoch weitergehende Funktionen dem Multifunktionsbedienelement zuweisen; also weitere Funktionen, die über die o. g. hinausgehen, so müssen auch solche Funktionen gehandhabt werden, die üblicherweise im Kraftfahrzeug nicht über Displays angezeigt werden. Dies betrifft die Zuschaltung von Aggregaten wie Sitzheizung, Heckscheibenheizung und weitere mehr. Es ist jedoch ein wesentliches Ziel, das Multifunktionsbedienelement auch tatsächlich multifunktional, am besten für alle im Fahrzeug vorgesehenen Funktionen einzurichten.

Beispielsweise ist es ansonsten üblich, die Betätigung der Sitzheizung durch Tastendruck zu realisieren. Hierzu befinden sich mit entsprechenden Symbolen versehene Funktionstasten ansonsten im Kraftfahrzeug, und bei entsprechender Betätigung der besagten Funktionstasten, wird beispielsweise die besagte Sitzheizung eingeschaltet. Eine entsprechende Funktionsleuchte signalisiert den aktiven Zustand. Ein nochmaliges Betätigen schaltet dabei die Sitzheizung wiederum aus. Dies ist die übliche Betriebsweise. Mit Hilfe eines Multifunktionsbedienelementes ist es jedoch möglich, die Sitzheizungsbetätigung differenzierter vornehmen zu können. Was in diesem Falle für die Betätigung der Sitzheizung von Vorteil wäre, gilt jedoch auch für alle übrigen weitergehenden Funktionen, für die normalerweise im Kraftfahrzeug keine Anzeige, also keine Displayanzeige vorgesehen ist.

Der Erfindung liegt daher die Aufgabe zugrunde, eine Verbesserung der Bedienbarkeit sämtlicher im Fahrzeug vorgesehenen Funktionen über das zentrale Multifunktionsbedienelement durchführen zu können und dies in einer Weise zu realisieren, daß eine selbsterklärende Menüführung vorgegeben ist.

Die gestellte Aufgabe wird bei einem Verfahren der gattungsgemäßen Art erfindungsgemäß durch die kennzeichnenden Merkmale des Patentanspruches 1 gelöst.

Weitere vorteilhafte Ausgestaltungen des erfindungsgemäßen Verfahrens sind in den weiteren abhängigen Ansprüchen angegeben.

Der Kern der Erfindung besteht hierbei darin, daß durch die Betätigung von Gerätewahltasten das auf dem Display zuvor dargestellte Menü oder die zuvor dargestellte Anzeige lediglich temporär vom aktuellen Betätigungsmenü überlagert wird, und daß lediglich für die Dauer der überlagerten Anzeige des aktuellen Betätigungsmenüs die ausgewählte Funktion einschaltbar, ausschaltbar oder einstellbar ist.

Hierbei ist gewährleistet, daß sämtliche Funktionen innerhalb des Kraftfahrzeuges mehr oder weniger zwanghaft über das Display und somit über das Multifunktionsbedienelement geführt werden. Dies eröffnet die Möglichkeit, daß nunmehr auch Gerätebetätigungen, die ansonsten nur den Status 'ein' oder 'aus' kannten, nunmehr auch differenzierter eingestellt und sogar variiert werden können. Hierzu muß das Multifunktionsbedienelement entsprechend bediensicher sein.

So ist in weiterer vorteilhafter Ausgestaltung angegeben, daß die Zeitdauer der Überlagerung einige Sekunden beträgt und lediglich in dieser Zeit den Softkeys oder anderen Verstellmitteln des Multifunktionsbedienelementes, die entsprechenden Verstell-oder Einstellfunktionen temporär zugeordnet sind. Erfolgt während dieser besagten Dauer der überlagerten Anzeige keine weitergehende Verstellung oder Einstellung, so kehrt das System selbsttätig nach Ablauf der besagten Dauer wieder auf die zuvor gewählte Anzeige bzw. die zuvor dargestellte Anzeige auf dem Display zurück. Der Bediener, in den meisten Fällen der Fahrzeugführer, muß also selbst nichts zurücksetzen, wenn er in einem Bedienungsablauf nicht fortfährt.

In weiterer vorteilhafter Ausgestaltung ist angegeben, daß die Aktivierung und damit der Aktivierungsstatus einer Gerätefunktion durch eine eingeschaltete Kontrolleuchte an der betreffenden Gerätewahltaste sichtbar gemacht wird. Mit derselben ist dann beispielsweise erkennbar, daß außer der auf dem Display dargestellten Funktion noch weitere Funktionen betätigt sind. An einem Beispiel kann dies folgendes heißen. Auf dem Display wird beispielsweise im mittleren Anzeigefeld der Betätigungsstatus der Klimaanlage oder beispielsweise des Navigationssystemes angezeigt. Währenddessen möchte der Fahrzeugführer nun die Sitzheizung betätigen. Er betätigt dazu die entsprechende Auswahltaste, die mit dem Symbol der Sitzheizung versehen ist. Er betätigt diese Auswahltaste durch einen kurzzeitigen Tastendruck. Dadurch wird nun die zuvor dargestellte Anzeige, nämlich die des Navigationssystemes temporär von dem nun aktivierten Betätigungsmenü der Sitzheizung überlagert. Diese vorgegebene und vorgesehene Überlagerungszeit dauert einige Sekunden an. Innerhalb dieser Zeit sind den am Rand des Bildschirms angeordneten Softkeys, oder den Funktionstasten sitzheizungsbezogene Betätigungs- bzw. Verstellfunktionen zugeordnet. Diese durch das temporär überlagerte Menü dargestellten Symbole werden randseitig an den Funktionstasten angezeigt.

Durch diese jeweilige tastenbezogene Anzeige weiterer Symbole oder Schriftzüge wird für den Fahrer ersichtlich, die entsprechende Funktion der Funktionstaste zugewiesen und kenntlich gemacht. Er kann sodann innerhalb dieser besagten Überlagerungsdauer von einigen Sekunden über die Softkeys bzw. eine Betätigung derselben die Sitzheizung nicht nur anschalten, sondern er kann auch ggf. die Temperatur einstellen. Hat er die gewünschte Temperatur eingestellt, so braucht er nichts weiter zu tun, als das Bedienelement nun selbsttätig nach einigen Sekunden auf den ursprünglichen Darstellungsmodus zurückkehren zu lassen. Dieser ursprüngliche Darstellungsmodus ist dann beispielsweise die besagte Darstellung des Navigationssystemes oder der Klimaanlage.

Das System kehrt somit selbsttätig zurück. Lediglich die Kontrolleuchte auf der Auswahltaste signalisiert ihm, daß die Sitzheizung aktiviert ist. Wenn der Fahrzeugführer nun die Auswahltaste ein weiteres Mal drückt, so würde dies bei Bedienelementen im Stand der Technik bewirken, daß die Sitzheizung ausgeschaltet würde. Genau dies ist aber beim erfindungsgemäßen Verfahren anders gelöst. Durch die besagte zwanghafte Menüführung bewirkt das nochmalige Drücken der Auswahltaste nicht das Abschalten der Sitzheizung, sondern das temporäre Aufschalten der Darstellung der Sitzheizungsfunktion im Display. Erscheint dies nun als Überlagerungsmenü auf dem Display, so kann er durch die Betätigung des entsprechend gekennzeichneten Softkeys die Sitzheizung ausschalten oder ggf. in der Temperaturwahl verändern.

Dies bedeutet in wenigen Worten, daß eine Deaktivierung der betreffenden Gerätefunktion durch nochmaliges Betätigen der betreffenden Gerätewahltaste und der nachfolgenden Betätigung des entsprechenden Deaktivierungssoftkeys, während der Dauer der Menüüberlagerung erfolgt. Somit bleiben die Auswahltasten lediglich Auswahltasten, die ansonsten keine weitere Schaltfunktion haben, als lediglich für eine kurze Dauer ein Betätigungsmenü auf dem Bildschirm zu überlagern.

Um dies weitergehend deutlich zu machen, kann während der Dauer des temporär aktivierten Betätigungsmenüs das zuvor dargestellte Menü durch Abdunklung optisch in den Hintergrund gesetzt werden.

In letzter erfindungsgemäßer Ausgestaltung ist, wie oben bereits am Beispiel ausgeführt, vorgesehen, daß das zuvor eingestellte Menü und die entsprechende Anzeige das bzw. die der Klimaanlage ist und daß das temporär überlagerte Menü und die entsprechende überlagerte Anzeige das bzw. die der Sitzheizung ist.

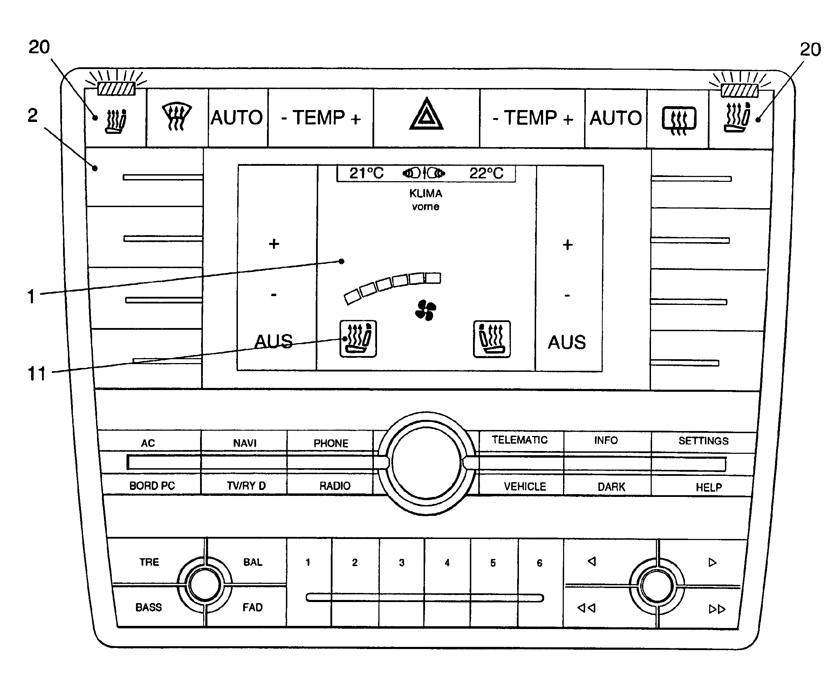

Die Funktionsweise des erfindungsgemäßen Verfahrens ist ergänzend anhand der Abbildung an einem Beispiel kurz dargestellt.

Die Abbildung zeigt ein Multifunktionsbedienelement mit einem Display 1 sowie randseitig am Display angeordnete Funktionstasten 2. Oberhalb des Displays ist eine Betätigungsleiste mit verschiedenen Auswahltasten. Die besagten Auswahltasten 20 sind mit verschiedenen Symbolen entsprechend ihrer Funktion versehen. Links außen befindet sich beispielsweise die Auswahltaste für die Sitzheizung. Auf dem Display 1 wird in diesem Ausgestaltungsbeispiel die aktivierte Klimaanlage mitsamt ihren ausgeregelten Daten, wie Temperatur, Belüftungszustand und dgl. Mehr, angezeigt.

In dem hier dargestellten Betriebszustand wird nunmehr die Auswahltaste 20 für die Sitzheizung betätigt. Hierdurch wird die bisherige Anzeige des Betriebszustandes der Klimaanlage zurückgedrängt bzw. entweder im Hinblick auf den Kontrast oder die Helligkeit abgeschwächt. Überlagert wird dann die Displayanzeige von aktuellen Betätigungsstatusanzeigen 11, nämlich die Schalt- und Betätigungssymbole der Sitzheizung, die nunmehr auf dem mittleren Anzeigepanel des Displays 1 hervorgehoben dargestellt werden. Zusätzlich kann zur Unterstützung ein akustisches Signal ausgegeben werden, das die Aufmerksamkeit des Benutzers auf die Displayanzeige lenkt. Diese Veränderung der Displayanzeige ist nur temporär und dauert einige Sekunden an bzw. endet einige Sekunden nach der letzten Betätigungseingabe. Die Displayanzeige, insbesondere die Anzeige der besagten Symbole 11, die nunmehr hervortreten, und sozusagen die zuvorige Anzeige auf dem Display 1 überlagern oder zurückdrängen, können auch farblich kenntlich gemacht werden. Während dieser Dauer werden natürlich auch die Randbeschriftungen, die auf dem Display 1 vorgenommen werden, und den Funktionstasten 2 zugewiesen sind, verändert. So werden beispielsweise den Funktionstasten 2 die Funktionen an oder aus oder Temperatursteigerung oder -absenkung in der entsprechend dargestellten Weise zugewiesen. Auch diese überlagerte menügeführte Anzeige dauert nur einige Sekunden, nämlich für die Überlagerungsdauer der über die Auswahltaste 20 aufgerufenen Geräte.

Bei Ausbleiben einer Betätigung der Funktionstasten bzw. der Softkeys 2 kehrt das System nach einigen Sekunden selbsttätig wieder auf die zuvorige Anzeige im Display zurück, nämlich auf die der Klimaanlage. Das Rückkehren wird jedoch verzögert, wenn während der temporären Überlagerungsdauer eine Funktionstastenbetätigung aktiviert wird bzw. vorgenommen wird.

Erst nach Eingabe einer letzten Anzeige und dem Ablauf der besagten Sekunden nach der letzten Eingabe, erfolgt dann die Rückkehr auf die ursprüngliche Anzeige. Da die Betätigung oder der Betätigungszustand oder -status der Sitzheizung auf dem Display nach Ablauf der Überlagerungsdauer nicht mehr angezeigt wird, erfolgt zur Erkennung des aktivierten Betriebszustandes der Sitzheizung eine Aktivierung der Kontrolleuchte an der Auswahltaste 20.

Bei nochmaligem Betätigen der Auswahltaste 20 erreicht der Bediener jedoch nicht das Ausschalten der Sitzheizung, sondern es wird, wie oben bereits dargestellt, das besagte Menü wieder aufgerufen, um die entsprechende Funktion ggf. die Ausschaltung dann über die Funktionstastenbetätigung der Funktionstasten 2 durchführen zu können.

Somit ist das System zwanghaft menügeführt, wodurch das System selbsterklärend und quasi frei von Fehlbedienungen wird. Darüber hinaus wird ermöglicht, daß die Betätigung beispielsweise der Sitzheizung nicht mehr nur die Funktion 'ein' oder 'aus' beinhaltet, sondern daß die Betätigung differenziert, also gestuft oder auch stufenlos in der Temperatur variiert werden kann. Mit Hilfe einer solchen Menüführung werden die Bedienungsvielfalten der auswählbaren Funktionen zwar deutlich erhöht, aber die Bedienung als solches wird durch diese zwanghafte Menüführung selbsterklärend und damit unkompliziert und einfach verständlich, obwohl eine höhere Vielfalt von Funktionen betätigbar ist.

## Patentansprüche

1. Verfahren zur Gerätebedienung in Kraftfahrzeugen mit einem Multifunktionsbedienelement, bei welchem verschiedenen Geräten zugewiesene Funktionen auf einem gemeinsamen Display (1) dargestellt bzw. angezeigt werden, und deren Einstellbarkeiten Funktionstasten (2) zugewiesen werden,
**dadurch gekennzeichnet,**
**daß** durch die Betätigung von Gerätewahltasten (20) das auf dem Display (1) zuvor dargestellte Menü oder die zuvor dargestellte Anzeige lediglich temporär vom aktuellen Betätigungsmenü (11) überlagert wird, und daß lediglich für die Dauer der überlagerten Anzeige des aktuellen Betätigungsmenüs ausgewählte Funktionen mittels der Funktionstasten einschaltbar, ausschaltbar oder einstellbar sind.

2. Verfahren nach Anspruch 1,
**dadurch gekennzeichnet,**
**daß** die Zeitdauer der Überlagerung einige Sekunden beträgt und lediglich in dieser Zeit den Softkeys bzw. den Funktionstasten (2) oder anderen Verstellmitteln des Funktionsbedienelementes die entsprechenden Verstell- oder Einstellfunktionen temporär zugeordnet sind.

3. Verfahren nach Anspruch 2,
**dadurch gekennzeichnet,**
**daß** die Anzeige im Display (1) nach Ablauf der besagten Überlagerungsdauer selbsttätig auf die zuvor eingestellte Anzeige zurückkehrt.

4. Verfahren nach Anspruch 3,
**dadurch gekennzeichnet,**
**daß** die Aktivierung, und damit der Aktivierungsstatus einer Gerätefunktion durch eine eingeschaltete Kontrolleuchte an der betreffenden Gerätewahltaste (20) sichtbar gemacht wird.

5. Verfahren nach Anspruch 4,
**dadurch gekennzeichnet,**
**daß** eine Deaktivierung der betreffenden Gerätefunktion lediglich durch nochmaliges Betätigen der betreffenden Gerätewahltaste (20) und/oder dem nachfolgenden Betätigen der entsprechenden Deaktivierungsbedienelement (2) während der Überlagerungsdauer erfolgt.

6. Verfahren nach einem der vorhergehenden Ansprüche,
**dadurch gekennzeichnet,**
**daß** während der Dauer des temporär aktivierten Betätigungsmenüs das zuvor dargestellte Menü durch Abdunklung optisch in den Hintergrund gesetzt wird.

7. Verfahren nach einem der vorhergehenden Ansprüche,
**dadurch gekennzeichnet,**
**daß** das zuvor eingestellte Menü und die entsprechende Anzeige das bzw. die der Klimaanlage ist, und daß das temporär überlagerte Menü und die entsprechende überlagerte Anzeige das bzw. die der Sitzheizung ist.

## Claims

1. Method for operating devices in motor vehicles having a multifunctional operator control element, in which method functions which are allocated to various devices are shown or displayed on a common display (1) and their setting options are allocated to function keys (2),
**characterized**
**in that** the current operating menu (11) is only temporarily superimposed on the menu which was previously shown on the display (1) or the previously shown information by operating device selection keys (20), and in that selected functions can be switched on, switched off or set by means of the function keys only for the duration of the superimposed information of the current operating menu.

2. Method according to Claim 1,
**characterized**
**in that** the superimposition lasts for a few seconds and the corresponding adjustment or setting functions are temporarily associated with the soft keys and/or the function keys (2) or other adjustment means of the multifunctional operator control element only for this time.

3. Method according to Claim 2,
**characterized**
**in that** the information on the display (1)
automatically returns to the previously set information after the said superimposition period elapses.

4. Method according to Claim 3,
**characterized**
**in that** activation, and therefore the activation status of a device function, is shown by a pilot light on the device selection key (20) in question being switched on.

5. Method according to Claim 4,
**characterized**
**in that** the device function in question is deactivated only by once again operating the device selection key (20) in question and/or subsequent operation of the corresponding deactivating operator control element (2) during the superimposition period.

6. Method according to one of the preceding claims,
**characterized**
**in that** the menu which was previously shown is visually moved into the background by being made darker for the duration of the temporarily activated operating menu.

7. Method according to one of the preceding claims,
**characterized**
**in that** the previously set menu and the corresponding information relate to the air-conditioning system, and
**in that** the temporarily superimposed menu and the corresponding superimposed information relate to the seat heater.

## Revendications

1. Procédé pour la commande d'appareils dans des véhicules automobiles au moyen d'un élément de commande multifonctions, selon lequel des fonctions affectées à différents appareils sont représentées ou affichées sur un afficheur commun (1), et dont les possibilités de réglage sont affectées à des touches de fonctions (2), **caractérisé en ce que**, par l'actionnement de touches (20) de sélection d'appareil, le menu d'actionnement actuel (11) est seulement temporairement superposé au menu préalablement représenté sur l'afficheur (1) ou à l'affichage préalablement représenté, et **en ce que** les fonctions sélectionnées peuvent, au moyen des touches de fonctions, être activées, désactivées ou réglées uniquement pendant la durée de l'affichage superposé du menu d'actionnement actuel.

2. Procédé selon la revendication 1, **caractérisé en ce que** la durée de la superposition est de quelques secondes, et les fonctions correspondantes de manoeuvre ou de réglage ne sont temporairement associées que pendant cette durée aux touches programmables ou aux touches de fonctions (2) ou autres moyens de manoeuvre de l'élément de commande multifonctions.

3. Procédé selon la revendication 2, **caractérisé en ce que** l'affichage sur l'afficheur (1) revient automatiquement à l'affichage préalablement réglé à l'expiration de ladite durée de superposition.

4. Procédé selon la revendication 3, **caractérisé en ce que** l'activation et donc l'état d'activation d'une fonction d'appareil est rendu visible sur la touche concernée (20) de sélection d'appareil par un témoin lumineux allumé.

5. Procédé selon la revendication 4, **caractérisé en ce que** la désactivation de la fonction d'appareil concernée s'effectue uniquement par un nouvel actionnement de la touche concernée (20) de sélection d'appareil et/ou l'actionnement consécutif de l'élément correspondant (2) de commande de désactivation, pendant la durée de superposition.

6. Procédé selon l'une quelconque des revendications précédentes, **caractérisé en ce que**, pendant la durée du menu d'actionnement temporairement activé, le menu préalablement représenté est mis visuellement à l'arrière-plan par obscurcissement.

7. Procédé selon l'une quelconque des revendications précédentes, **caractérisé en ce que** le menu préalablement réglé et l'affichage correspondant sont ceux du système de climatisation, et **en ce que** le menu temporairement superposé et l'affichage superposé correspondant sont ceux du chauffage de siège.
